# EUROPEAN PATENT SPECIFICATION

(11) **EP 2 798 134 B1**
(45) Date of publication and mention of the grant of the patent: **28.10.2015**
(21) Application number: 12810063.3
(22) Date of filing: 21.12.2012
(51) Int. Cl.: E04H 12/08, F03D 11/04

(54) **A RING SHAPED FLANGE FOR ATTACHMENT OF A WIND TURBINE TOWER SECTION TO ANOTHER TOWER SECTION**
RINGFÖRMIGER FLANSCH ZUR BEFESTIGUNG EINES WINDTURBINENTURMABSCHNITTS AN EINEM ANDEREN TURMABSCHNITT
BRIDE ANNULAIRE DE FIXATION D'UNE SECTION DE TOUR ÉOLIENNE À UN AUTRE SECTION DE TOUR

(30) Priority: 28.12.2011 US 201161580773 P
(43) Date of publication of application: 05.11.2014
(73) Proprietor: Vestas Wind Systems A/S, 8200 Aarhus N (DK)
(72) Inventor: JENSEN, Michael, DK-6705 Esbjerg Ø (DK)
(74) Representative: Vestas Patents Department
(86) International application number: PCT/DK2012/050501
(87) International publication number: WO 2013/097866

(56) References cited:
- US-A1- 2010 307 097
- US-A1- 2011 138 704
- US-A1- 2011 138 707

## Description

The present invention relates to a ring shaped flange for joining wind turbine tower sections, and to a method of joining tower sections by use of such a flange. Particularly, the invention relates to a flange with a joining surface to be joined with a corresponding joining surface of a flange of an adjacent tower section by use of assembly rods.

Modern wind turbines comprise a tower construction which traditionally is formed by tapered round tower sections mounted on top of each other. Typically, the tower sections are made of a steel plate rolled into a tubular shape and assembled by welding of opposite free ends thereby constituting a closed ring. Alternatively, each section may be formed by a number of plates being assembled to form a tower section.

To attach one tower section to another tower section, attachment flanges are provided for each of the tower sections. Traditionally, these flanges are formed by use of a steel plate rolled into shape and assembled by welding of opposite free ends thereby constituting a closed ring. To ensure sufficient strength of the flange, the steel plate has to be very thick. Subsequently, a number of holes are drilled in the flange in order to be able to attach a flange of one tower section to a flange of another tower section. The flanges and thus the tower sections are attached to each other by aligning the attachment holes of the first flange with attachment holes of the second flange. Attachment bolt are then inserted through the holes and tightened. The assembly of tower sections is thereby a time consuming process.

In a development of this basic structure US2010/307097 discloses a structure where opposed mating flange faces are provided with cooperating projections and recesses for the purpose of improving mechanical connection and reducing shear loads on the flange bolts.

### Summary

It is an object of embodiments of the present invention to provide a flange facilitating easier assembly of tower sections and a method of assembling tower sections by use of the flange.

In a first aspect, the invention provides a flange with projections extending inwardly, e.g. radially inwardly. The projections define pockets adapted for receiving assembly rods for fixing the flange to a flange of an adjacent tower section. The pockets are open in a direction that extends inwardly of the ring shaped flange.

Due to the open pockets, the assembly rods can be inserted in the pockets in an easy manner compared to the known flanges. The assembly rods may simply be inserted into the pockets from the inner of the flange instead of inserting these rods through holes in the flanges. It may further be achieved that the assembly rods are inserted with nuts attached hereto, so that only tensioning hereof remains after insertion of the assembly rods. As the assembly rods may weigh up to 10 kg each, or even more, these pockets may substantially reduce the work load associated the mounting of the assembly rods, since the assembly rods do not have to be inserted through assembly holes in the flange.

The projections may extend radially inwards whereby the pockets between the projections extend radially outwardly.

Alternatively, the projections may extend inwardly with an angle e.g. in the range of 45-135 degrees relative to the periphery of the flange. i.e. the pockets may generally be formed as indentations of any shape in the flange, and may be open radially towards the inner of the ring shaped flange.

The projections may e.g. extend in parallel to each other, and they may have a tapered shape whereby a cross section of each projection or the cross section of at least of some of the projections becomes smaller with an increasing distance from the outer periphery of the flange. By this feature, the pockets will narrow down from the opening into the pockets towards the bottom of the pocket. This will make insertion of assembly rods easier.

Each flange comprises a joining surface which is to be joined with a corresponding joining surface of a segment of a flange of an adjacent tower section. Thus, when the tower is finished and erected, a joining surface of one segment is facing downwards whereas the corresponding joining surface of the segment of the adjacent tower section is facing upwards.

The assembly rods may be bolts adapted for tension. Thus, upper and/or lower parts of the assembly rods may be threaded allowing for attachment of a nut thereto. Before fastening a nut to the upper and/or lower part of the assembly rods, a force may be may be applied to the assembly rods in the longitudinal direction, thereby applying tension on the assembly rods.

Thus, the assembly rods may fix the flanges by a contraction force in the longitudinal direction. And each pocket may facilitate receipt of an assembly rod in a direction β transverse to the longitudinal direction. To facilitate insertion of the assembly rods, the direction β may be radial from the centre of the ring shaped flange.

A seat for an assembly rod may be formed at each pocket of a ring segment. The seat may provide an even surface for receiving a tensioned assembly rod, and may include features to prevent removal of the rod from the pocket without a preceding movement of the rod in the longitudinal direction. The seat may thus prevent the assembly rod from falling or sliding out of the pocket when the nut is not fastened to the assembly rod.

In one embodiment, the seat includes protrusions that extend from a surface against which the assembly rods operate when fixing two adjacent flanges. When inserting the assembly rod into the pocket, the nut or head of an assembly rod may be lifted over the protrusions. The protrusions thereby prevent removal of the assembly rod from the pocket without lifting the nut or head of the bolt back over the protrusions, i.e. without a preceding movement of the rod in the longitudinal direction. This feature thereby prevents the assembly rods from sliding sideways out of the pockets.

The flange may further comprise grooves in the projections between adjacent pockets to form an interrupted circumferential surface that extends along the ring segments, and potentially an entire flange. The grooves may form a contact surface that has a sloping angle intersecting an interface plane defined by the joining surface. In this respect, the groove may form a downwardly sloping surface relative to the joining surface of an upward facing flange and an upwardly sloping surface relative to the joining surface of a downwardly facing flange. It should be understood, that an upward facing flange is a flange to be joined with a downwardly facing flange, the upwardly facing flange being joined with a tower section below the flange and the downwardly facing flange being joined with a tower section above the flange.

Grooves in flanges that are mounted to one another may thus together form a contact surface having a sloping angle, where the angles of the two grooves are opposite to each other. A tool or other item may be attached to the trajectories and retention of the tool may be facilitated due to the opposite sloping angles of the contact surfaces.

The flange may comprise a recess extending from an edge into the joining surface to form a cavity which is accessible from the edge when the joining surface is joined with the corresponding joining surface of a flange of an adjacent tower section, i.e. when joining two flanges of two adjacent tower sections, the two recesses may together form a cavity in the joined flanges.

The recess may extend from an edge of the flange, which edge may face towards the centre of the ring shaped flange, whereby the cavity is accessible form the inner of the flange.

The recess may comprise an insertion section with a first depth from the joining surface into the flange and a suspension section with a second depth from the joining surface into the flange, the second depth being larger than the first depth. It may thereby be achieved that an item being inserted into the recess is retained in the cavity, when inserted through the insertion section to the suspension section. To remove the item from the cavity, the item may be lifted to the level of the insertion section, i.e. to a higher level.

The flange may comprise one or more of the above described recesses such that one or more suspension fittings can be inserted in the cavities and an item can be carried by the fittings. One example of an item carried by more suspension fittings could be a platform, e.g. for workers carrying out work inside the turbine tower. Other examples could be suspension of ladders, cables, lamps, turbine controllers, elevators, or other equipment which is used in a wind turbine.

To reduce the workload associated with machining of the flange after preparation thereof, the flange may be moulded, such as through a casting procedure, a forging procedure, or the like. It may thereby be possible to make flanges without having to machine the segments after removing them from the mould, or with at least only a small amount of machining, e.g. only planning of the joining surface. As opposed hereto, it is necessary to drill holes in a traditional flange which is made from a steel plate. Consequently, it may be possible to substantially reduce the workload associated with machining of the flange, and particularly of the pockets which according to this invention may be formed by contact with a surface of a mould during moulding.

The flange may have an outer circumferential surface with a stepped configuration which defines a transition between two portions of the flange, herein referred to as an internal portion which is intended to extend into a tubular tower section to which the flange is attached, and an external portion which does not extend into the tubular tower section. The flange may be attached to a tubular steel section e.g. by welding the flange and the steel section at the axial transition formed by the step along the outer surface.

The step may particularly be bevelled relative to the outer surface, i.e. non-perpendicular to the outer surface. The step may e.g. form an angle in the range of 45-135 degrees to the outer surface.

In a second aspect, the invention provides a wind turbine tower made from tower sections, where at least two tower sections or all tower sections are provided with a flange according to the first aspect of the invention. The tower sections are joined by assembly rods located in the pockets.

When the assembly rods are inserted into the pockets during the assembly of the tower, it may be an advantage to join the assembly rods in a belt such that they are easier to handle by automatic assembly equipment. In that case, the belt may remain attached to the rods after the assembly.

The tower may have an outer surface which is alternatingly formed by the tubular steel sections and an external portion of the flanges arranged between the tubular steel sections.

In a third aspect, the invention provides a method of fixing a ring shaped flange of the kind described above to a flange of another wind turbine tower section, the method comprising the steps of:
- providing assembly rods with an elongated body extending in a longitudinal direction between two closed ends, where the closed ends have a larger cross-sectional area than the body,
- aligning the flanges so that pockets of one of the flanges are aligned with pockets of the other flange,
- inserting an assembly rod into at least some of the pockets,
- applying a contraction force to the assembly rods in the longitudinal direction,
- modifying at least one of the closed ends, and
- releasing the force to thereby compress the flanges by the assembly rods.

Due to the open pockets, the assembly rods are easy to insert in the pockets and the rods may be joined in a belt prior to the assembly. This facilitates better control over the assembly rods and facilitates automatic insertion by use of automatic equipment which handles the belt of assembly rods.

It should be understood, that the above-mentioned features of the first aspect of the invention may also be applicable in relation to the method according to the second aspect of the invention. Thus, the second aspect may comprise any combination of features and elements of the first aspect of the invention.

### Brief description of the drawings

Embodiments of the invention will now be further described with reference to the drawings, in which:
Fig. 1 shows abutting shoulders of two ring segments mated to one another, as the ring segments may be mated to one another when incorporated into flanges of mating wind turbine tower sections;
Fig. 2 and 3 illustrate parts of the ring segment embodiment of Fig. 1,
Fig. 4 illustrates parts of two ring segments with abutting shoulder; and

### Detailed description of the drawings

It should be understood, that the detailed description and specific examples, while indicating embodiments of the invention, are given by way of illustration only, since various changes and modifications within the spirit and scope of the invention will become apparent to those skilled in the art from this detailed description.

The flange illustrated in the figures is split into ring segments. This is, however, not a prerequisite for the invention which could equally be in one piece.

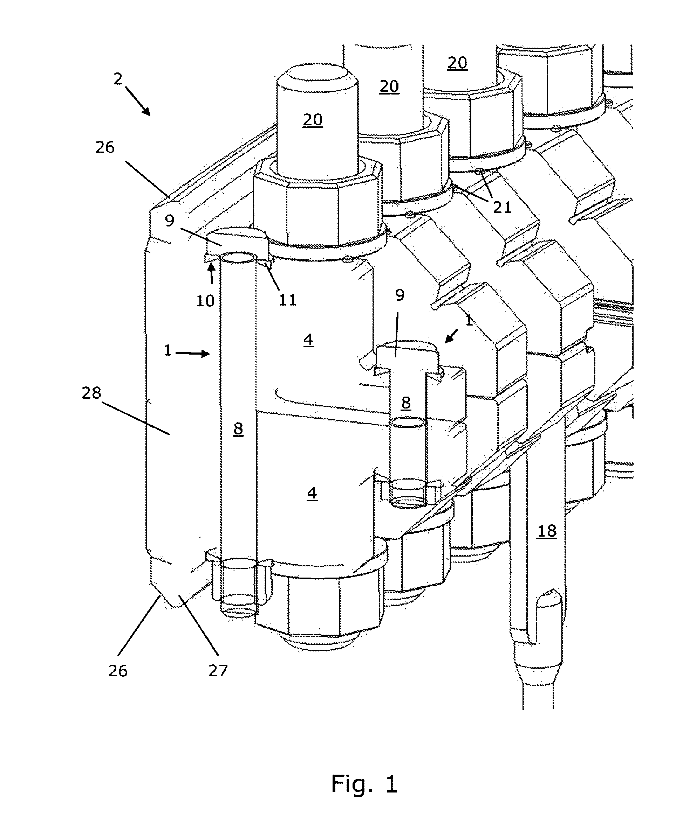

Fig. 1 illustrates ring segments of a pair of ring shaped flanges for attachment of a wind turbine tower section to another tower section. Each ring shaped flange is made of multiple ring segments 2, and potentially connectors 1 that hold the ring segments to one another.

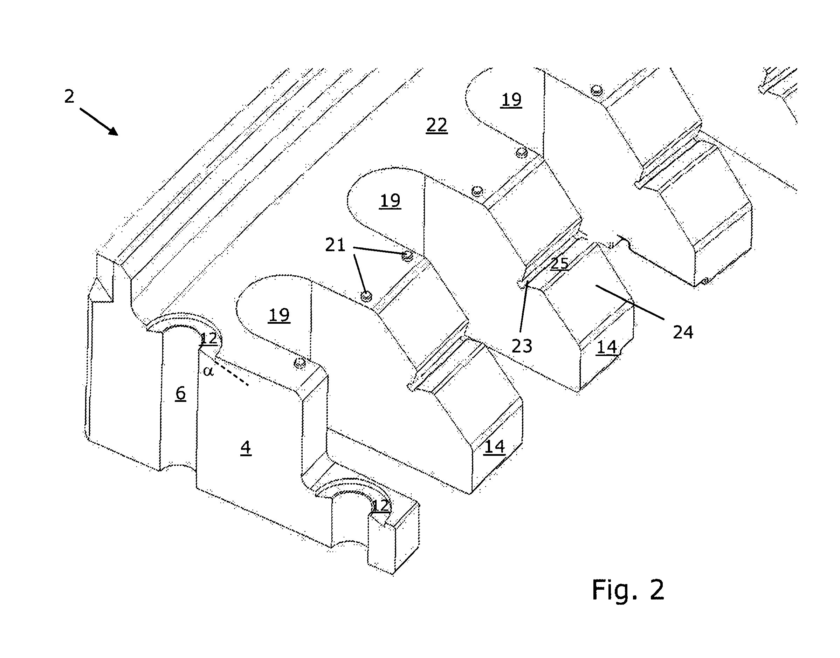

Figs. 2, 3, and 4 illustrate different parts of the ring segments 2 of the flange assembly seen in different views.

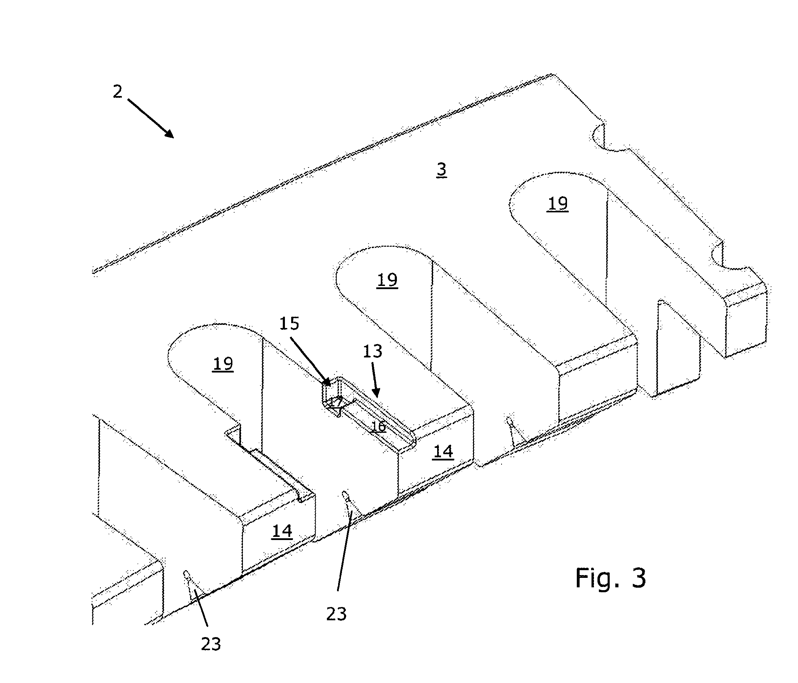

Each segment 2 comprises a welding protrusion for welding the segment to a tower wall of a corresponding tower section and a joining surface 3 (see Fig. 3) to be joined with a corresponding joining surface of a flange of an adjacent tower section. Furthermore, each segment 2 comprises abutting shoulders 4 at opposite ends 5 of the segment. Each abutting shoulder 4 is adapted to adjoin an abutting shoulder of an adjacent segment for joining the segments 2. The ring segments, as illustrated, include interconnection features 1 adapted to secure the segments to each other.

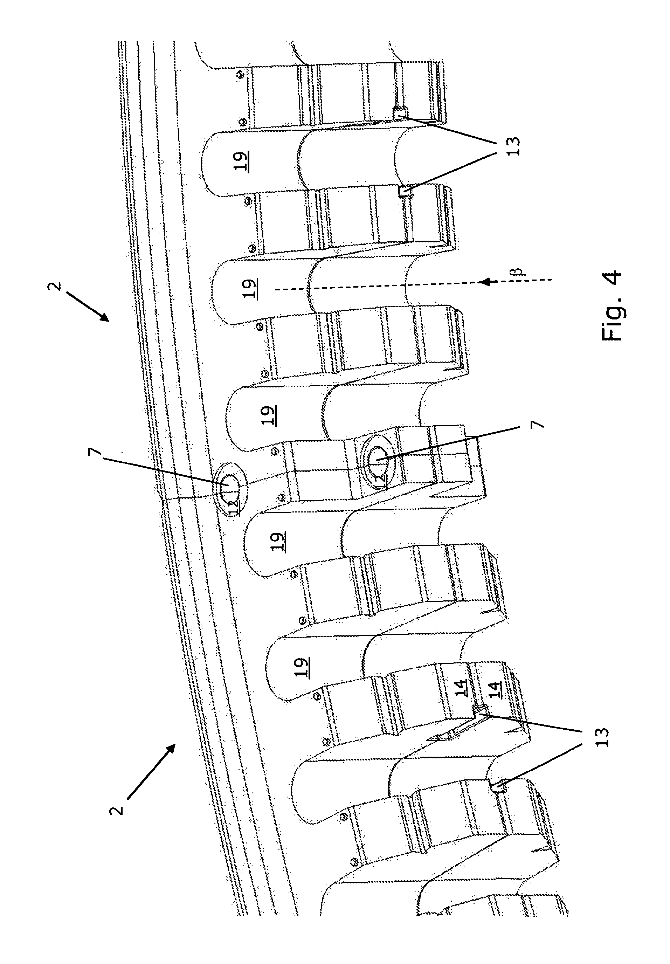

In each of the abutting shoulders 4 as illustrated in Figs. 1-4, the interconnection feature of the segment 2 comprises two notches 6 (see Fig. 2). These notches 6 are adapted to cooperate with corresponding notches in an abutting shoulder of an adjacent segment to form, in combination, a lead 7 (see Fig. 4) for a connector, such as a threaded fastener.

The lead 7 shown in Fig. 4 is configured to receive a connector, such as a threaded fastener, that has a body 8 extending upwardly in a longitudinal direction towards a head 9. The head forms a downwards contraction surface 10 that extends outwardly and downwardly with respect to the body. In the illustrated embodiment, the head is made in two pieces, so that the contraction surface extending outwardly and downwardly is formed in part by a washer 11.

To help a connector urge two adjacent segments 2 in attachment to each other, each segment comprises an assembly surface 12 (see Fig. 2) extending from the abutting shoulder 4 at a pointed angle α relative to the abutting shoulder. The assembly surface 12 is formed in the joining surface 3 around the notch 6 to facilitate cooperation between the assembly surface 12 and the connector 1. Thus, the assembly surface 12 cooperates with the contraction surface 10 of a corresponding connector 1 to press two adjacent segments 2 towards each other upon application of a force in the longitudinal direction of the body 7. I.e. when applying a force to the body 7 in the longitudinal direction, the contraction surface 10 of the head 9 is pressed towards the assembly surface 12.

The ring segment comprises a plurality of recesses 13 (see Figs. 3 and 4) extending from an edge 14 of the flange into the joining surface 3 to form a cavity 15 which is accessible from the edge 14 when the joining surface 3 is joined with the corresponding joining surface 3 of a flange of an adjacent tower section.

The recesses 13 comprise an insertion section 16 with a first depth from the joining surface 3 into the flange and a suspension section 17 with a second depth from the joining surface 3 into the flange, where the second depth is larger than the first depth. An item inserted into the recess 13 is retained in the cavity 15, when inserted through the insertion section 16 to the suspension section 17. According to some embodiments, the item may be trapped within the recess(es) when the joining surface is mated to a joining surface of an adjacent tower section, such as by having a size that will not pass through the portion of the recess having the first depth. In this respect, disassembly of the item from the flange in an assembled tower may be prevented. According to other embodiments, however, items may be sized for removal from a recess in a fully assembled tower.

Fig. 1 illustrates an example of an item 18 inserted in a cavity 15. In this embodiment, the item 18 is a suspension fitting. By inserting suspension fittings 18 in each of the cavities 15, these fittings 18 can carry a platform (not shown) for workers carrying out work inside the turbine tower, or other items that may be suspended within the interior of a wind turbine tower, such as ladders, cables, elevators, lights, and the like.

Furthermore, a plurality of pockets 19 is formed in the flange. The pockets are adapted to receive assembly rods 20 (see Fig. 1) for fixing the flange to a flange of an adjacent tower section. As illustrated in Fig. 2, 3, and 4, the pockets are open radially inwards, i.e. towards the inner of the ring shaped flange.

By forming the pockets 19 as Indentations being open towards the inner of the flange, mounting of the assembly rods 19 is facilitated, as the assembly rods 19 can be inserted into the pockets 19 from the inner of the flange instead of inserting them through holes in the flanges. The assembly rods 19 are, in this embodiment, bolts adapted for tension. Thus, the assembly rods 19 fix the flanges by a contraction force in the longitudinal direction. Each pocket 19 facilitates receipt of an assembly rod 20 in a direction p (see Fig. 4) transverse to the longitudinal direction.

The inclusion of pockets 19 that open radially inward can provide for greater flexibility and/or efficiency in the process used to fasten a flange to an adjacent flange. By way of example, according to some embodiments, assembly rods 19 are held to one another by a belt for subsequent assembly to flanges. The assembly rods may include threaded fasteners pre-assembled with washers and nuts. According to one approach, a single belt may include a complete set of assembly rods and corresponding hardware (washers, nuts, etc.) for joining a pair of flanges. One or more belts may be provided to assembly personnel in a tower assembly, who then position assembly rods and other hardware of the one or more belts into recesses of the flanges. In this respect, the number of components that are to be handled individually by assembly personnel may be significantly reduced.

In the embodiment of Fig. 5, a central portion of each assembly rod that is to be received within pockets of the flanges is attached to the belt. Other configurations are, however, also possible, including belts that connect to one or both ends of the assembly rods, or even to the threaded nuts that mate with assembly rods or are integral portions of the assembly rods themselves. Each pocket 19 of a flange forms a seat for the assembly rod 20 to prevent removal of the rod 20 from the pocket 19 without a preceding movement of the rod in the longitudinal direction. In the illustrated embodiment, the seat forms protrusions 21 in an upwards surface 22 against which the assembly rods 20 operate when fixing two adjacent flanges.

The flange further comprises grooves 23 in projections 24 between adjacent pockets 19 to form a trajectory which extends circumferentially along the flange. The grooves 23 form a contact surface 25 so that the grooves 23 form a downwardly sloping surface relative to the joining surface 3 of an upward facing flange and a upwardly sloping surface relative to the joining surface of a downwardly facing flange.

Grooves 23 formed in the flanges can be used for various purposes, including the attachment of a tool to the inner portion of the flange that may be used to install and or fasten the assembly rods. The groove may provide a surface along which the tool may move about the flange during assembly rod installation and/or fastening. The trajectories of the groove may help retain the tool in position due to the opposite sloping angles of the contact surfaces 25. The groove may, additionally or alternatively, be used for other purposes, such as receiving a portion of a belt that holds assembly rods to one another during assembly.

Fig. 1 further illustrates that the flange has an outer circumferential surface with a stepped configuration, forming an axial transition 26 between an internal portion 27 of the flange having a first radial size and an external portion 28 of the flange having a second radial size. The second radial size is larger than the first radial size. The flange is to be attached to a tubular tower section such that the internal portion is inside the tubular section and the external portion is outside the tubular section and thereby forms an outer surface of the wind turbine tower.

## Claims

1. A ring shaped flange for attachment of a wind turbine tower section to another tower section, the flange comprising:
a joining surface (3) to be joined with a corresponding joining surface of a flange of an adjacent tower section
**characterised in that** there is provided:
a plurality of projections (24) that extend inwardly of the ring shaped flange and that define pockets (19) adapted for receiving assembly rods (20) for fixing the flange to a flange of an adjacent tower section, wherein the pockets (19) are open in a direction that extends inwardly of the ring shaped flange.

2. A flange according to claim 1, wherein a seat for each assembly rod (20) is formed in the ring shaped flange adjacent an end of each pocket on a surface that faces away from the joining surface, the seat preventing removal of the rod from the pocket without a preceding movement of the rod in a direction away from the joining surface.

3. A flange according to claim 2, wherein the seat includes protrusions (21) that extend away from the joining surface to prevent removal of the rod from the pocket.

4. A flange according to any of the preceding claims, further comprising grooves (23) in the plurality of projections (24) to form an interrupted circumferential groove along the flange.

5. A flange according to claim 4, wherein surfaces that form the circumferential groove forms a contact surface (25) having a sloping angle intersecting an interface plane defined by the joining surface (3).

6. A flange according to any of the preceding claims, further comprising a recess (13) extending from an edge (14) of the joining surface that lies inwardly of the ring shaped flange and that forms a cavity (15) which is accessible from the edge when the joining surface (3) is joined with the corresponding joining surface of the flange of the adjacent tower section.

7. A flange according to claim 6, wherein the recess (13) comprises an insertion section (16) with a first depth from the joining surface (3) into the flange and a suspension section (17) with a second depth from the joining surface (3) into the flange, the second depth being larger than the first depth.

8. A flange according to any of the preceding claims, wherein the flange is moulded.

9. A flange according to claim 8, where at least an interior surface of the pockets is formed by contact with a surface of a mould during moulding.

10. A flange according to claim 9, where the moulded flange is machined at most on the joining surfaces.

11. A flange according to any of the preceding claims, comprising an outer circumferential surface with a stepped configuration, forming an axial transition between an internal portion of the flange having a first radial size and an external portion of the flange having a second radial size being larger than the first radial size.

12. A wind turbine tower made from tower sections, where at least two tower sections comprises tubular steel sections terminating in at least one end with a flange according to any of claims 1-11, and where the tower sections are joined by assembly rods located in the pockets.

13. A wind turbine tower according to claim 12, where the assembly rods are joined by an assembly belt.

14. A wind turbine tower according to any of claims 12-13, where a circumferential outer surface of an external portion of the flange forms an outer surface of the tower.

15. A method of fixing a ring shaped flange according to any of claims 1-11 to a flange of another wind turbine tower section, the method comprising the steps of:
- providing assembly rods (20) with an elongated body extending in a longitudinal direction between two closed ends, where the closed ends have a larger cross-sectional area than the body,
- aligning the flanges so that pockets of one of the flanges are aligned with pockets of the other flange,
- inserting an assembly rod into at least some of the pockets,
- applying a contraction force to the assembly rods in the longitudinal direction,
- modifying at least one of the closed ends, and
- releasing the force to thereby compress the flanges by the assembly rods.

16. A method according to claim 15, where the assembly rods are joined in a belt prior to the insertion of the assembly rods into the pockets.

## Patentansprüche

1. Ringförmiger Flansch zur Befestigung eines Windturbinenturmabschnitts an einen anderen Turmabschnitt, wobei der Flansch umfasst:
eine Verbindungsoberfläche (3), die mit einer entsprechenden Verbindungsoberfläche eines Flansches eines benachbarten Turmabschnitts verbunden werden soll,
**dadurch gekennzeichnet, dass** Folgendes bereitgestellt ist:
mehrere Überstände (24), die such nach innen von dem ringförmigen Flansch erstrecken und die Taschen (19) definieren, die dafür ausgelegt sind, Verbindungsstangen (20) zum Befestigen des Flansches an einem Flansch eines benachbarten Turmabschnitts aufzunehmen, wobei die Taschen (19) in einer Richtung, die sich nach innen von dem ringförmigen Flansch erstreckt, offen sind.

2. Flansch nach Anspruch 1, wobei ein Sitz für jede Verbindungsstange (20) in dem ringförmigen Flansch benachbart an einem Ende einer jeden Tasche auf einer Oberfläche, die von der Verbindungsoberfläche weggewandt ist, gebildet ist, wobei der Sitz eine Entfernung der Stange aus der Tasche ohne eine vorangehende Bewegung der Stange in einer Richtung weg von der Verbindungsoberfläche verhindert.

3. Flansch nach Anspruch 2, wobei der Sitz Überstände (21) enthält, die sich von der Verbindungsoberfläche wegerstrecken, um eine Entfernung der Stange aus der Tasche zu verhindern.

4. Flansch nach einem der vorhergehenden Ansprüche, der ferner Einschnitte (23) in den mehreren Überständen (24) umfasst, um einen unterbrochenen Umfangseinschnitt entlang des Flansches zu bilden.

5. Flansch nach Anspruch 4, wobei Oberflächen, die den Umfangseinschnitt bilden, eine Kontaktoberfläche (25) bilden, die einen Neigungswinkel aufweist, der eine Schnittstellenebene schneidet, die durch die Verbindungsoberfläche (3) definiert ist.

6. Flansch nach einem der vorhergehenden Ansprüche, der ferner eine Aussparung (13) umfasst, die sich von einer Kante (14) der Verbindungsoberfläche erstreckt, die nach innen von dem ringförmigen Flansch liegt und die einen Hohlraum (15) bildet, der von der Kante zugänglich ist, wenn die Verbindungsoberfläche (3) mit der entsprechenden Verbindungsoberfläche des Flansches des benachbarten Turmabschnitts verbunden ist.

7. Flansch nach Anspruch 6, wobei die Aussparung (13) einen Einsetzungsabschnitt (16) mit einer ersten Tiefe von der Verbindungsoberfläche (3) in den Flansch und einen Aufhängungsabschnitt (17) mit einer zweiten Tiefe von der Verbindungsoberfläche (3) in den Flansch umfasst, wobei die zweite Tiefe größer als die erste Tiefe ist.

8. Flansch nach einem der vorhergehenden Ansprüche, wobei der Flansch geformt ist.

9. Flansch nach Anspruch 8, wobei mindestens eine Innenoberfläche der Taschen durch einen Kontakt mit einer Oberfläche mit einer Oberfläche einer Form während des Formens gebildet wird.

10. Flansch nach Anspruch 9, wobei der geformte Flansch am meisten auf den Verbindungsoberflächen bearbeitet ist.

11. Flansch nach einem der vorhergehenden Ansprüche, der eine äußere Umfangsoberfläche mit einer gestuften Konfiguration umfasst, wobei ein axialer Übergang zwischen einem inneren Abschnitt des Flansches, der eine erste radiale Größe aufweist, und einem äußeren Abschnitt des Flansches, der eine zweite radiale Größe aufweist, die größer als die erste radiale Größe ist, geformt ist.

12. Windturbinenturm, der aus Turmabschnitten hergestellt ist, wobei mindestens zwei Turmabschnitte rohrförmige Stahlabschnitte umfassen, die an mindestens einem Ende mit einem Flansch nach einem der Ansprüche 1 bis 11 enden, und wobei die Turmabschnitte durch Verbindungsstangen, die in den Taschen angeordnet sind, verbunden sind.

13. Windturbinenturm nach Anspruch 12, wobei die Verbindungsstangen durch ein Montageband verbunden werden.

14. Windturbinenturm nach einem der Ansprüche 12 bis 13, wobei eine äußere Umfangsoberfläche eines Außenabschnitts des Flansches eine Außenoberfläche des Turms bildet.

15. Verfahren zum Befestigen eines ringförmigen Flansches nach einem der Ansprüche 1 bis 11 an einem Flansch eines anderen Windturbinenturmabschnitts, wobei das Verfahren die folgenden Schritte umfasst:
- Bereitstellen von Verbindungsstangen (20) mit einem langgestreckten Körper in einer Längsrichtung zwischen zwei geschlossenen Enden, wobei die geschlossenen Enden eine größere Querschnittsfläche als der Körper aufweisen,
- Ausrichten der Flansche derart, dass die Taschen des einen der Flansche auf die Taschen des anderen Flansches ausgerichtet sind,
- Einsetzen einer Verbindungsstange in mindestens einige der Taschen,
- Ausüben einer Kontraktionskraft auf die Verbindungsstangen in der Längsrichtung,
- Modifizieren mindestens eines der geschlossenen Enden, und
- Lösen und Freigeben der Kraft, um dadurch die Flansche durch die Verbindungsstangen zusammenzudrücken.

16. Verfahren nach Anspruch 15, wobei die Verbindungsstangen auf einem Transportband vor dem Einsetzen der Verbindungsstangen in die Taschen verbunden werden.

## Revendications

1. Bride annulaire pour l'attachement d'une section de tour d'éolienne à une autre section de tour, la bride comprenant :
une surface de jonction (3) à joindre à une surface de jonction correspondante d'une bride d'une section de tour adjacente
**caractérisée en ce que** sont prévus :
une pluralité de parties en saillie (24) qui s'étendent vers l'intérieur de la bride annulaire et qui définissent des poches (19) conçues pour recevoir des tiges d'assemblage (20) pour fixer la bride à une bride d'une section de tour adjacente, dans laquelle les poches (19) sont ouvertes dans un sens qui s'étend vers l'intérieur de la bride annulaire.

2. Bride selon la revendication 1, dans laquelle un siège pour chaque tige d'assemblage (20) est formé dans la bride annulaire adjacent à une extrémité de chaque poche sur une surface qui fait face loin de la surface de jonction, le siège empêchant l'enlèvement de la tige de la poche sans un mouvement précédent de la tige dans un sens s'écartant de la surface de jonction.

3. Bride selon la revendication 2, dans laquelle le siège inclut des protubérances (21) qui s'étendent loin de la surface de jonction pour empêcher l'enlèvement de la tige depuis la poche.

4. Bride selon n'importe laquelle des revendications précédentes, comprenant en outre des nervures (23) dans la pluralité de parties en saillie (24) pour former une rainure circonférentielle interrompue le long de la bride.

5. Bride selon la revendication 4, dans laquelle des surfaces qui forment la rainure circonférentielle forment une surface de contact (25) ayant un angle d'inclinaison coupant un plan d'interface défini par la surface de jonction (3).

6. Bride selon n'importe laquelle des revendications précédentes, comprenant en outre une partie en retrait (13) s'étendant à partir d'un bord (14) de la surface de jonction qui se situe vers l'intérieur de la bride annulaire et qui forme une cavité (15) qui est accessible à partir du bord quand la surface de jonction (3) est jointe à la surface de jonction correspondante de la bride de la section de tour adjacente.

7. Bride selon la revendication 6, dans laquelle la partie en retrait (13) comprend une section d'insertion (16) avec une première profondeur à partir de la surface de jonction (3) dans la bride et une section de suspension (17) avec une seconde profondeur à partir de la surface de jonction (3) dans la bride, la seconde profondeur étant plus grande que la première profondeur.

8. Bride selon n'importe laquelle des revendications précédentes, dans laquelle la bride est moulée.

9. Bride selon la revendication 8, où au moins une surface intérieure des poches est formée par contact avec une surface d'un moule pendant le moulage.

10. Bride selon la revendication 9, où la bride moulée est usinée au plus sur les surfaces de jonction.

11. Bride selon n'importe laquelle des revendications précédentes, comprenant une surface circonférentielle extérieure ayant une configuration étagée, formant une transition axiale entre une partie interne de la bride ayant une première taille radiale et une partie externe de la bride ayant une seconde taille radiale plus grande que la première taille radiale.

12. Tour d'éolienne faite de sections de tour, où au moins deux sections de tour comprennent des sections tubulaires d'acier se terminant dans au moins une extrémité avec une bride selon n'importe laquelle des revendications 1 à 11, et où les sections de tour sont jointes par des tiges d'assemblage situées dans les poches.

13. Tour d'éolienne selon la revendication 12, où les tiges d'assemblage sont jointes par une ceinture d'assemblage.

14. Tour d'éolienne selon n'importe laquelle des revendications 12 et 13, où une surface extérieure circonférentielle d'une partie externe de la bride forme une surface extérieure de la tour.

15. Procédé de fixation d'une bride annulaire selon n'importe laquelle des revendications 1 à 11 à une bride d'une autre section de tour d'éolienne, le procédé comprenant les étapes consistant à :
- fournir des tiges d'assemblage (20) ayant un corps allongé s'étendant dans une direction longitudinale entre deux extrémités fermées, où les extrémités fermées ont une plus grande surface transversale que le corps,
- aligner les brides de sorte que des poches d'une des brides sont alignées sur les poches de l'autre bride,
- insérer une tige d'assemblage dans au moins certaines des poches,
- appliquer une force de contraction aux tiges d'assemblage dans la direction longitudinale,
- modifier au moins une des extrémités fermées, et
- libérer la force pour comprimer ainsi les brides par les tiges d'assemblage.

16. Procédé selon la revendication 15, où les tiges d'assemblage sont jointes dans une ceinture avant l'insertion des tiges d'assemblage dans les poches.
